# EUROPÄISCHE PATENTSCHRIFT

(11) **EP 0 869 062 B1**
(45) Veröffentlichungstag und Bekanntmachung des Hinweises auf die Patenterteilung: **24.09.2003**
(21) Anmeldenummer: 98104863.0
(22) Anmeldetag: 18.03.1998
(51) Int. Cl.: B64D 27/26

(54) **Triebwerksaufhängung, insbesondere für Propellerflugzeuge, mit einem Stabwerk zur Befestigung eines Triebwerks**
Turbine mount, in particular for propeller aircraft, with a framework for fixing a turbine
Support de turbine, en particulier pour aéronefs à hélice, avec une ossature pour la fixation de la turbine

(30) Priorität: 01.04.1997 DE 19713365
(43) Veröffentlichungstag der Anmeldung: 07.10.1998
(73) Patentinhaber: Deutsches Zentrum für Luft- und Raumfahrt e.V., 53175 Bonn (DE); ERAS GmbH, 37085 Göttingen (DE)
(72) Erfinder: Breitbach, Elmar J., Prof. Dr.-Ing., 37075 Göttingen (DE); Grützmacher, Torsten, 37085 Göttingen (DE)
(74) Vertreter: Patentanwälte Rehberg + Hüppe

(56) Entgegenhaltungen:
- DE-A- 4 008 568
- DE-C- 4 310 825
- FR-A- 2 309 402
- FR-A- 2 698 848
- NL-C- 47 605

## Beschreibung

Die Erfindung bezieht sich auf eine Triebwerksaufhängung, insbesondere für Propellerflugzeuge, mit einem Stabwerk zur Befestigung eines Triebwerks an einer tragenden Struktur, insbesondere an einem Flügelkasten, wobei das Stabwerk eine Mehrzahl von punktförmig miteinander verbundenen und gegeneinander verstrebten Stäben aufweist und das Triebwerk teilweise umgibt, wobei das Triebwerk in der Antriebsrichtung des Triebwerks an einem Ende des Stabwerks drehmomentfest gelagert ist und wobei das Stabwerk in der Antriebsrichtung des Triebwerks an seinem anderen Ende an der tragenden Struktur drehmomentfest gelagert ist.

Propellerflugzeuge sind strahlgetriebenen Flugzeugen im Kurzstreckenbereich grundsätzlich überlegen. Die Triebwerke von Propellerflugzeugen kommen mit kürzeren Anlaufphasen aus. Ihr Energieverbrauch ist geringer und bei dem angesprochenen Kurzstreckenbetrieb ist auch ihre Wartung weniger aufwendig. Insgesamt ergeben sich daher deutlich geringere Unterhaltungskosten.

Allerdings sind Triebwerksaufhängungen von Propellerflugzeugen verschiedenen Störanregungen ausgesetzt, die im Ergebnis zu einer Schwingungsübertragung auf die tragende Struktur führen, an der die jeweilige Triebwerksaufhängung gelagert ist. Die sich über die tragende Struktur ausbreitenden Schwingungen führen zu einer deutlichen Reduktion des Reisekomforts bei Propellerflugzeugen. Der Unterschied zu strahlgetriebenen Flugzeugen ist so deutlich, daß de facto auch auf Kurzstrecken viele strahlgetriebene Flugzeuge eingesetzt werden, um Passagiere zu halten und deren Abwandern zu anderen Fluglinien zu vermeiden.

Eine Triebwerksaufhängung der eingangs beschriebenen Art ist von einem Propellerflugzeug, dem Regional-Airliner DO 328 der Dornier Luftfahrt GmbH, bekannt. Das Triebwerk ist an dem einen Ende des Stabwerks der Triebwerksaufhängung über sogenannte Shockmounts drehmomentfest an dem Stabwerk gelagert. Das entsprechende Ende des Stabwerks wird von einem sogenannten Horsecollar gebildet. Der Horsecollar ist über V-förmig angeordnete Stäbe mit einem U-förmigen, vertikal angeordneten Mittelrahmen verbunden, der nach unten offen ist. Der Mittelrahmen ist wiederum über V-förmig angeordnete Stäbe mit einem vertikalen Rahmen aus Stäben verbunden, der im oberen Bereich starr an einem Flügelkasten befestigt ist. Von diesem Rahmen erstrecken sich weitere Stäbe nach hinten, die in einem Knotenpunkt zusammenlaufen, für welchen ein Auflager zur Aufnahme vertikaler Kräfte an dem Flügelkasten vorgesehen ist. Neben der drehmomentfesten Lagerung des Triebwerks an dem Horsecollar ist eine Aufhängung an dem Mittelrahmen vorgesehen, welche eine Wärmeausdehnung des Triebwerks gegenüber dem Stabwerk zuläßt. Die Shockmounts, über die das Triebwerk an dem Horsecollar gelagert sind, bestehen aus Elastomerwerkstoffen und sollen durch ihre Verformbarkeit Schwingungen des Triebwerks von dem Stabwerk isolieren. Die Shockmounts können jedoch nicht allein nach ihren schwingungsisolierenden Eigenschaften optimiert werden. Vielmehr sind ihre mechanischen und thermischen Belastungen beim Betrieb des Triebwerks zu berücksichtigen. Hinzu kommt eine Aushärtung über die Standzeit der Shockmounts durch eben diese mechanischen und thermischen Belastungen sowie durch äußere Einflüsse wie das Wetter, zum Enteisen von Rollbahnen eingesetztes Salz und Öl von dem Triebwerk, die ebenfalls zu einer künstlichen Alterung der Shockmounts führen. Selbst wenn die Shockmounts wie gefordert alle 6000 Flugstunden ausgewechselt werden, ist die Schwingungsisolierung durch die Shockmounts daher nur unzureichend.

Aus der NL 47 605 C ist eine Triebwerksaufhängung für ein Propellerflugzeug bekannt, bei der ein Triebwerk an einer tragenden Struktur elastisch gelagert aber über eine Lenkeranordnung gegenüber der tragenden Struktur geführt ist.

Die Erfindung bezieht sich nicht nur auf Triebwerksaufhängungen zur Befestigung eines Triebwerks an einen Flügelkasten. Als tragende Struktur für das Triebwerk kommt, insbesondere bei einmotorigen Propellerflugzeugen, auch der Rumpf bzw. dessen Rahmen infrage. Weiterhin sind Triebwerksaufhängungen eingangs beschriebenen Art auch für Strahltriebwerke geeignet, auch wenn die erläuterten Schwingungsprobleme vornehmlich bei Propellertriebwerken auftreten.

Aus der FR-A-2 309 402 ist eine Triebswerksaufhängung für ein Strahlflugzeug bekannt, bei dem ein Strahltriebwerk oberhalb des Flügelkastens in einem das Strahltriebwerk umschließenden und mit dem Flügelkasten starr verbundenen Gehäuse über zum Teil längenveränderliche Befestigungselemente gelagert ist. Die längenveränderlichen Befestigungselemente dienen zur Einstellung und Aufrechterhaltung einer Ausrichtung des Strahltiebwerks zu dem Rest des Flugzeugs und können dazu mit variablen Kräften beaufschlagt werden.

Der Erfindung liegt die Aufgabe zugrunde, eine Triebwerksaufhängung der eingangs beschriebenen Art aufzuzeigen, die für eine aktive Schwingungsisolierung besonders geeignet ist und dabei eine ausreichende passive Stabilität (fail-safe) bei geringem Gewicht aufweist.

Erfindungsgemäß wird diese Aufgabe durch eine Triebswerksaufhängung mit den Merkmalen des Patentanspruchs 1 gelöst.

Zum Zweck der aktiven Schwingungsisolierung wird bei der neuen Triebwerksaufhängung kein zusätzliches Strukturelement vorgesehen. Vielmehr wird ein bereits vorhandener passiver Stab des Stabwerks durch einen aktiven Stab ersetzt. Durch die Möglichkeit, die Länge des aktiven Stabs kontrolliert zu verändern, ist eine aktive Schwingungsisolierung der durch Störanregungen auftretenden Schwingungen des Triebwerks von der tragenden Struktur, an der die Triebwerksaufhängung aufgehängt ist, möglich. Dabei wird bewußt in kauf genommen, daß die Schwingungen des Triebwerks zunächst auf das Stabwerk übertragen werden. Dies bedeutet eine Abkehr von der in der Anordnung der bekannten Shockmounts implizit enthaltenen Lehre, bereits das Triebwerk von dem Stabwerk zu isolieren. Im Bereich des Stabwerks ist es unter den Randbedingungen einer drehmomentfesten Lagerung des Triebwerks viel einfacher, die angestrebte Schwingungsisolierung durchzuführen. In dem Stabwerk pflanzen sich die Schwingungen des Triebwerks als Schwingungen der Stäbe des Stabwerks fort. Sie sind so gezielt mit einem aktiven Stab kompensierbar, dessen Länge willkürlich veränderbar ist. Durch die Längenänderungen sind vorwiegend longitudinale aber auch transversale Schwingungen des Stabs bzw. des gesamten Stabwerks aktiv beeinflußbar.

Vorzugsweise ist der mindestens eine aktive Stab dort vorgesehen, wo das Stabwerk beim Betrieb des Triebwerks überdurchschnittliche dynamische Dehnungen erfährt. Dort wo sich die Störanregungen am stärksten bemerkbar machen, sind sie umgekehrt besonders leicht beeinflußbar. Es ist jedoch nicht zwingend erforderlich, den mindestens einen aktiven Stab genau dort vorzusehen, wo das Stabwerk beim Betrieb des Triebwerks seine maximale passive Dehnung erfährt. Vielmehr reicht es aus, wenn an dem jeweiligen Ort überhaupt dynamische Dehnungen aufgrund von Störanregungen beim Betriebs des Triebwerks auftreten, was in der Regel bei allen Stäben des Stabwerks einer Triebwerksaufhängung der Fall ist. Wenn der mindestens eine aktive Stab dort vorgesehen angeordnet werden soll, wo möglichst große dynamische Dehnungen auftreten, ist darauf zu achten, daß nur die dynamischen Anregungen interessieren, die mit der bzw. den Störanregungen im Zusammenhang stehen, deren resultierende Schwingungen von der tragenden Struktur isoliert werden soll. Es ist daher eine modale Betrachtung des gesamten dynamischen Systems vorzunehmen.

Aus der bereits angesprochenen Tatsache, daß eine Schwingung dort besonders gut beeinflußbar ist, wo sich ihre Auswirkungen zeigen, ist der mindestens eine aktive Stab vorzugsweise dort vorgesehen, wo das Stabwerk beim Betrieb des Triebwerks durch verschiedene Störmoden merkliche dynamische Dehnungen erfährt. So können diese verschiedenen Störmoden und die sie anregenden Störanregungen durch die kontrollierte Längenveränderung des Stabs bezüglich ihrer Auswirkungen auf den die tragende Struktur aktiv beeinflußt werden.

Im praktischen Versuch hat es sich herausgestellt, daß der mindestens eine aktive Stab besonders günstig in Kraftflußrichtung der auf die tragende Struktur einwirkenden Lagerungskräfte der Triebwerksaufhängung angeordnet ist. Hier werden in aller Regel vergleichsweise große passive Dehnungen aufgrund der einzelnen Störanregungen des Triebwerks beobachtet.

Bei einem in der Antriebsrichtung des Triebwerks durch einen quer zu der Antriebsrichtung angeordneten Mittelrahmen unterteilten Stabwerk ist der mindesten eine aktive Stab vorzugsweise in dem der tragenden Struktur zugewandten Teil des Stabwerks angeordnet. Hier zeigt sich noch einmal die Abkehr der vorliegenden Erfindung vom Stand der Technik, nach dem bereits das Triebwerk bezüglich seiner Schwingungen von dem Stabwerk zu isolieren ist. Die Erfindung nimmt ein schwingendes Stabwerk zugunsten einer besonders effektiven Beeinflussungsmöglichkeit der auftretenden Schwingungen bewußt in kauf.

Der mindestens eine aktive Stab ist vorzugsweise zum Aufbringen großer Kräfte bei kleinen Längenänderungen ausgebildet. Dies ist einmal Voraussetzung für die Wirksamkeit des aktiven Stabs zur effektiven Schwingungsisolierung. Andererseits werden nur bei einer solchen Grundkonstruktion passive Eigenschaften der Triebwerksaufhängung erreicht, die ein Ausfallen der aktiven Schwingungsisolierung ungefährlich machen (fail-safe), auch wenn dies einen Rückgang des Reisekomforts auf den Stand der Technik bedeutet.

Zur Durchführung der aktiven Schwingungsisolierung ist eine Steuerung vorzusehen, die die Länge des mindestens einen aktiven Stabs gezielt verändert. Im einfachsten Fall ist die Steuerung als Regler ausgebildet, der die Länge des mindestens einen aktiven Stabs derart verändert, daß die in vertikaler Richtung auf die tragende Struktur einwirkenden Lagerungskräfte konstant gehalten werden. Ein Schwanken der in vertikaler Richtung auf die tragende Struktur einwirkenden Lagerungskräfte wird in besonderer Weise als schlechter Reisekomfort von den Passagieren registriert.

Einem solchen Regler ist typischerweise ein Schwingungssensor zugeordnet, der zu isolierende Störanregung bzw. die von ihnen ausgehende Anregung der Störmoden registriert. Der Regler verändert die Länge des aktiven Stabs mit der Frequenz der Störanregung, wobei die Amplitude der Längenveränderung und deren Phasenwinkel zu der Störanregung im zeitlichen Verlauf variiert werden können, um die Schwingungsisolierung für jeden Zeitpunkt zu optimieren. Die Abstimmung der Frequenz der Längenveränderung des aktiven Stabs auf die Frequenz der Störanregung bzw. des zugehörigen Störmodes entspricht dem Konzept einer modalen destruktiven Interferenz zur Schwingungsisolierung der tragenden Struktur.

Um eine bestimmt Störanregung des Triebwerks von der tragenden Struktur zu isolieren, kann ein beliebiger Stab des Stabwerks durch einen aktiven Stab ersetzt werden. Dabei kann es günstig sein, wenn zwei in zu einer vertikalen Mittellängsebene der Triebwerksaufhängung spiegelsymmetrisch angeordneten Positionen angeordnete Stäbe durch aktive Stäbe ersetzt werden, um mit den aktiven Stäben resultierende Kräfte in dieser Mittellängsebene aufzubringen. Mehrere aktive Stäbe sind aber insbesondere dann sinnvoll, wenn verschiedene Störanregungen des Triebwerk von der tragenden Struktur isoliert werden sollen. Dann ist vorzugsweise je Richtung, in der beim Betrieb des Triebwerks sich ändernde Lagerungskräfte auf die tragende Struktur einwirken, mindestens eine aktiver Stab in dem Stabwerk vorgesehen. Dabei ist mit "je Richtung" entweder jede unabhängige geometrische Richtung oder jede unabhängige Richtung der Störmoden im Phasenraum gemeint. Mehrere aktive Stäbe sind aber nur erforderlich, wenn die Orte der dynamischen Dehnungen des Stabwerks der Triebwerksaufhängung durch die einzelnen Störmoden und/oder deren Frequenzen weit auseinanderfallen.

Der mindestens eine aktive Stab kann zwei Rohrabschnitte aus Kohlefaserverbundwerkstoff mit achsparallelen unidirektionalen Fasern aufweisen, wobei die beiden Rohrabschnitte durch einen weiteren Rohrabschnitt aus Kohlefaserverbundwerkstoff miteinander verbunden sind, der die beiden Rohrabschnitte zumindest teilweise übergreift und der sich unter einem Winkel zur Stabachse kreuzende Fasern aufweist, und wobei zwischen den beiden Rohrabschnitten ein ansteuerbarer Aktuator unter Vorspannung angeordnet ist. Ein solcher aktiver Stab ist auch aus der DE 43 10 825 C1 zur Ausbildung adaptiver Fachwerkstrukturen bekannt. Der Aufbau des Stabs ist dort im einzelnen beschrieben. Ein solcher Stab kann unverändert zur Realisation der Erfindung in ein Stabwerk einer Triebwerksaufhängung integriert werden.

Neben dem aktiven Stab können auch alle anderen Stäbe des Stabwerks Rohrabschnitte aus Kohlefaserverbundwerkstoff aufweisen, wodurch das ganze Stabwerk bei sehr großer Stabilität besonders leichtgewichtig ausgebildet wird. Eine weitere Gewichtsreduktion wird durch zusätzliche Ausbildung etwaiger Rahmen des Stabwerks ebenfalls aus Kohlefaserverbundwerkstoff erreicht. Neben der Gewichtsreduktion ergibt diese Konstruktion auch schwingungstechnische Vorteile, da die Schwingungsmassen des Stabwerks nur gering und insbesondere im Vergleich zu den Schwingungsmassen des Triebwerks vernachlässigbar sind. Auch dies gehört zu dem Grundkonzept der Erfindung, die Schwingungsisolierung nicht zwischen dem Triebwerk und dem Stabwerk, sondern erst zwischen dem Stabwerk und der tragenden Struktur durchzuführen.

Durch die Erfindung ist es ohne weiteres möglich, das Triebwerk starr an dem Stabwerk zu lagern. Dadurch wird ausgeschlossen, daß sich das Schwingungsverhalten der Triebwerksaufhängung durch eine Veränderung der schwingungselastischen Eigenschaften der Shockmounts durch deren künstliche Alterung insgesamt verändert.

Mit dem mindestens einen aktiven Stab in dem Stabwerk ist eine Isolierung von strukturdynamischen Schwingungen bis zu einer Frequenz von 150 Hz möglich. Das heißt strukturdynamische Schwingungen, insbesondere die von Propellerflugzeugen bekannten Vibrationen werden nicht mehr auf die tragende Struktur übertragen. Zur zusätzlichen Isolierung höherfrequenter Schwingungen im akustischen Bereich kann das Stabwerk über mindestens ein aktives Interface an der tragenden Struktur gelagert sein, das mindestens einen ansteuerbaren Aktuator aufweist. In dem Interface werden laterale Kräfte vorzugsweise mechanisch abgetragen, um eine Belastung des Aktuators mit Scherkräften zu verhindern. Ein besonders gut geeignetes Interface für die Lagerung des Stabwerks an der tragenden Struktur ist beispielsweise aus der DE 195 27 514 A1 bekannt. Mit einem solchen Interface sind zusätzlich akustische Schwingungen im Bereich oberhalb von 150 Hz, d.h. sogenannter Körperschall, isolierbar, um den Reisekomfort bei einem Propellerflugzeug noch weiter zu verbessern.

Die Erfindung wird im folgenden anhand von Ausführungsbeispielen näher erläutert und beschrieben. Dabei zeigt
- Figur 1: die an einen Flügelkasten angehängte Triebwerksaufhängung mit Stabwerk und Triebwerk in perspektivischer Ansicht,
- Figur 2: eine modifizierte Ausführungsform des Stabwerks gemäß Figur 1 in einer schematisierten perspektivischen Darstellung und
- Figur 3: einen Längsschnitt durch einen aktiven Stab des Stabwerks gemäß den Figuren 1 und 2.

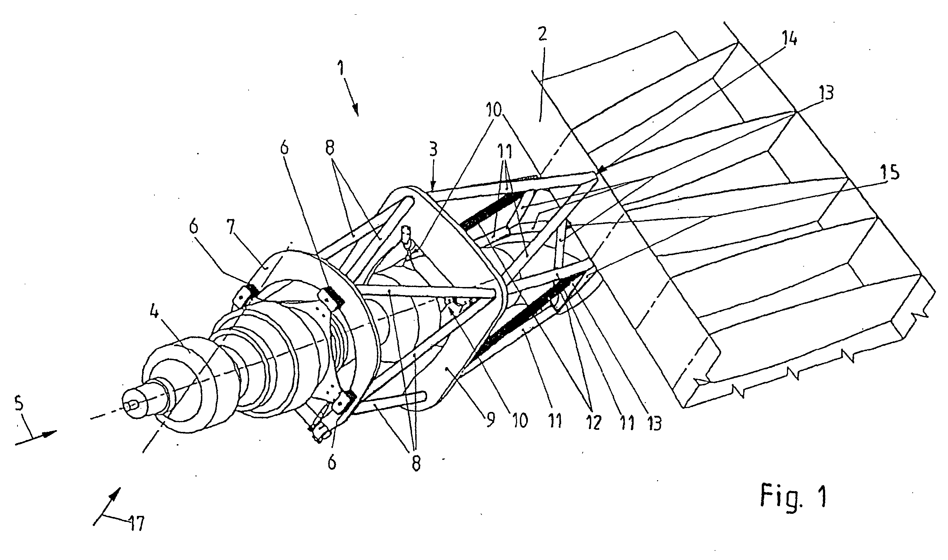

Die in Figur 1 dargestellte Triebwerksaufhängung 1 ist an einem Flügelkasten 2 aufgehängt. Die Triebwerksaufhängung 1 besteht aus einem drehmomentfest an dem Flügelkasten 2 gelagerten Stabwerk 3 und einem seinerseits drehmomentfest an dem Stabwerk 3 gelagerten Triebwerk 4. Dabei erstreckt sich das Triebwerk 4 teilweise innerhalb des Stabwerk 3. In der Antriebsrichtung 5 des Triebwerks 4 betrachtet, ist das Triebwerk 4 an dem vorderen Ende des Stabwerks 3 an dem Stabwerk 3 über sogenannte Shockmounts 6 gelagert. Die Shockmounts 6 bestehen aus Elastomerwerkstoff und bewirken eine gewisse Schwingungsisolierung des Triebwerks 4 von dem Stabwerk 3. Diese Schwingungsisolierung ist bei der erfindungsgemäßen aktiven Schwingungsisolierung im Bereich des Stabwerks 3 nicht zwingend erforderlich aber für die passiven Eigenschaften der Triebwerksaufhängung 1 vorteilhaft. Das vordere Ende des Stabwerks 3 wird aufgrund seiner Form als Horsecollar 7 bezeichnet. Von dem Horsecollar 7 erstrecken sich 6 Stäbe 8 in V-förmiger Anordnung nach hinten zu einem Mittelrahmen 9. An den Mittelrahmen 9 ist eine Aufhängung 10 für das Triebwerk 4 vorgesehen, die jedoch eine thermische Ausdehnung des Triebwerks in seiner Antriebsrichtung gegenüber dem Stabwerk 3 zuläßt. Von dem Mittelrahmen 9, der U-förmig ist, wobei seine Öffnung nach unten zeigt, erstrecken sich insgesamt 8 Stäbe 11 und 12 wiederum in V-förmiger Anordnung nach hinten bis an die Vorderkante des Flügelkastens 2. Dort ist in vertikaler Richtung durch Stäbe 13 ein weiterer Rahmen ausgebildet, der einerseits an einem Knotenpunkt 14 starr an der Vorderkante des Flügels gelagert ist und der sich andererseits über Stäbe 15 in einem weiteren Knotenpunkt an der Unterseite des Flügelkastens 2 abstützt. Insgesamt betrachtet sind die Stäbe 8, 11, 12, 13 und 15 des Stabwerks im Bereich der vertikalen Rahmen punktförmig miteinander verbunden und durch ihre V-förmigen Anordnungen gegeneinander verstrebt.

Zur Isolierung von Störanregungen des Triebwerks 4 in vertikaler Richtung 17 sind die beiden Stäbe 12 des Stabwerks 3 als aktive Stäbe ausgebildet, deren Länge mittels Ansteuerung durch eine hier nicht dargestellte Steuerung kontrolliert veränderbar ist. Die beiden Stäbe 12 sind in einem Bereich angeordnet, wo sich die Störanregungen des Triebwerks 4 in der vertikalen Richtung 17 durch passive Längenänderungen des Stabwerks 3 besonders bemerkbar machen. Sie sind jedoch nicht genau in der vertikalen Richtung 17 ausgerichtet.

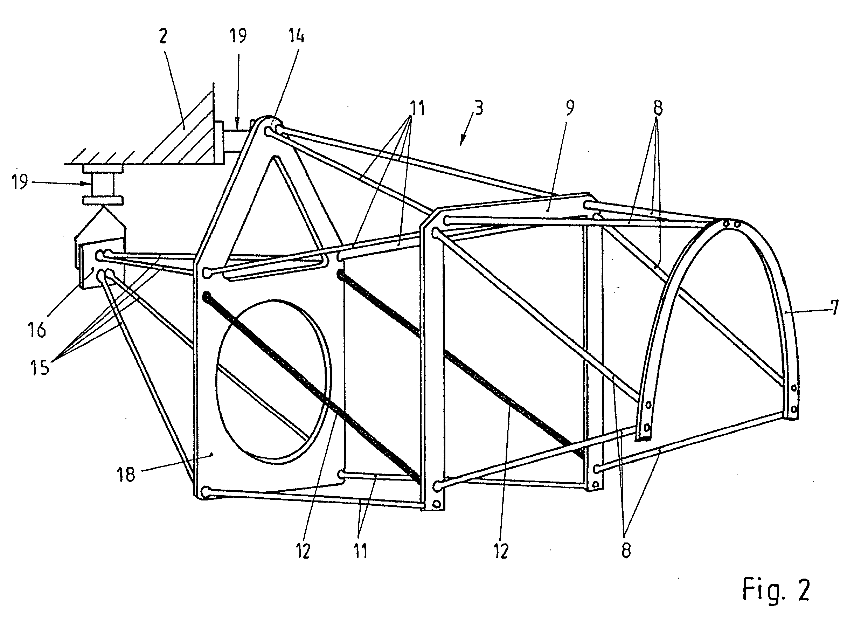

Die in Figur 2 separat wiedergegebene Abwandlung des Stabwerks 3 weicht dahingehend von der Ausführungsform gemäß Figur 1 ab, daß ein echter hinterer Rahmen 18 statt der Stäbe 13 vorgesehen ist. Der hintere Rahmen 18 ermöglicht es, daß alle Stäbe 8, 11, 12 und 15 endseitig an einem vertikalen Rahmen, dem Horsecollar 7, dem Mittelrahmen 9, dem Rahmen 18 oder dem Knotenpunkt 16, gelagert sind. Damit können alle Stäbe des Stabwerks 3 bis in ihre Endbereiche auf der Basis von Rohrabschnitten aus Kohlefaserverbundwerkstoff ausgebildet werden, um ein besonders geringes Gewicht des Stabwerks 3 zu realisieren. Ebenso können der Horsecollar 7, der Mittelrahmen 9, der Rahmen 18 und der Knotenpunkt 16 aus Kohlefaserverbundwerkstoff-Teilen ausgebildet sein. Als weiterer Unterschied zu Figur 1 sind an den Lagerstellen des Stabwerks 3 an dem Flügelkasten 2, d. h. zwischen den Knotenpunkten 14 und 16 und dem Flügelkasten 2, adaptive Interfaces 19 vorgesehen, die in schematischer Form wiedergegeben sind. Mit diesen Interfaces 19 kann eine weitergehende Schwingungsisolierung von Schwingungen des Triebwerks 4 gemäß Figur 1 gegenüber dem Flügelkasten 2 durchgeführt werden. Während die aktiven Stäbe 12 vornehmlich zur Schwingungsisolierung niederfrequenter Schwingungen bis 100 Hz geeignet sind, sind die Interfaces 19 insbesondere für den darüberliegenden Frequenzbereich vorgesehen. Zur Ansteuerung der aktiven Stäbe 12 und der adaptiven Interfaces ist eine hier nicht dargestellte Steuerung vorgesehen, die Beschleunigungssensoren an dem Triebwerk, dem Stabwerk und/oder dem Flügelkasten umfassen kann.

Modellrechnungen belegen, daß es allein durch eine geeignete Ansteuerung der beiden symmetrisch angeordneten aktiven Stäbe 12 tatsächlich möglich ist, auf das Triebwerk 4 einwirkende Störkräfte bis zu einer Frequenz von etwa 100 Hz bezüglich ihrer Auswirkungen in der vertikalen Richtung 4 auf den Flügelkasten 2 vollständig zu isolieren.

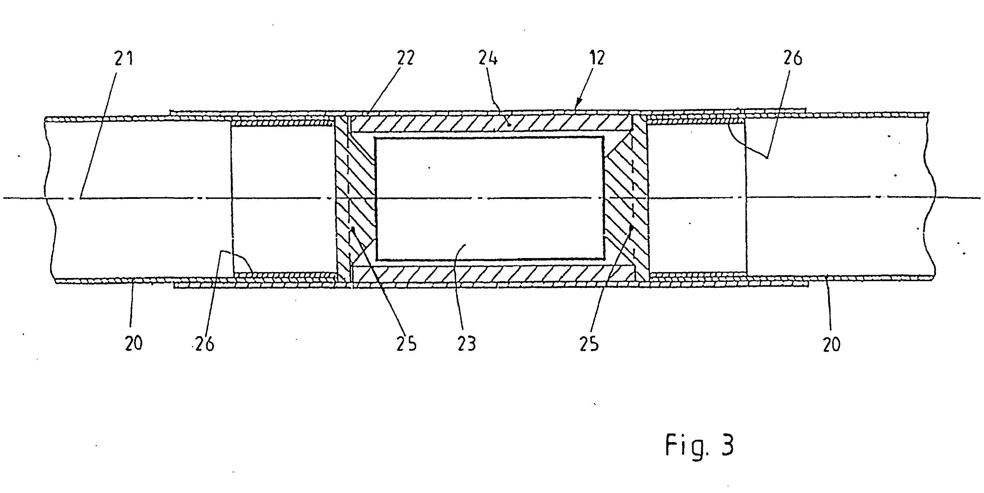

Einen Querschnitt durch einen der beiden aktiven Stäbe 12 zeigt Figur 3, wobei nur der Mittenbereich des aktiven Stabs 12 wiedergegeben ist. Der aktive Stab 12 weist 2 Rohrabschnitte 20 aus Kohlefaserverbundwerkstoff auf. Die Rohrabschnitte 20 weisen parallel zu der Stabachse 21 ausgerichtete unidirektionale Fasern auf. Verbunden sind die beiden Rohrabschnitte 20 durch einen weiteren Rohrabschnitt 22, der die beiden Rohrabschnitte 20 teilweise übergreift. Der Rohrabschnitt 22 weist die spiralförmig um die Stabachse 21 herum angeordnete Fasern in zwei gegenläufigen, sich kreuzenden Richtungen auf. Innerhalb des Rohrabschnitts 22 ist zwischen den Rohrabschnitten 20 ein ansteuerbarer Aktuator 23 angeordnet. Der ansteuerbare Aktuator 23 ist innerhalb einer Lagerhülse 24 angeordnet und wird endseitig durch zwei Kraftübertragungsstücke 25 mit einer Vorspannung beaufschlagt. Die Vorspannung wird von dem Rohrabschnitt 22 aufgebracht und wirkt über die freien Enden der Rohrabschnitte 20 auf die Kraftübertragungsstücke 25. Dabei sind die freien Enden der Rohrabschnitte 20 durch Verstärkungshülsen 26 verstärkt. Bei dem Aktuator 23 kann es sich um einen sogenannten Stapelaktuator handeln, der eine Längenänderung des gesamten Stabs 12 um mehrere 10 µm bewirken kann. Der in Figur 3 gezeigte Stab ist im einzelnen aus der DE 43 10 825 C1 bekannt.

### BEZUGSZEICHENLISTE

- 1 -: Triebwerksaufhängung
- 2 -: Flügelkasten
- 3 -: Stabwerk
- 4 -: Triebwerk
- 5 -: Antriebsrichtung
- 6 -: Shockmount
- 7 -: Horsecollar
- 8 -: Stab
- 9 -: Mittelrahmen
- 10 -: Aufhängung

- 11 -: Stab
- 12 -: aktiver Stab
- 13 -: Stab
- 14 -: Knotenpunkt
- 15 -: Stab
- 16 -: Knotenpunkt
- 17 -: vertikale Richtung
- 18 -: Rahmen
- 19 -: Interface
- 20 -: Rohrabschnitt

- 21 -: Stabachse
- 22 -: Rohrabschnitt
- 23 -: Aktuator
- 24 -: Lagerhülse
- 25 -: Kraftübertragungsstück
- 26 -: Verstärkungshülse

## Patentansprüche

1. Triebwerksaufhängung (1), insbesondere für Propellerflugzeuge, mit einem Stabwerk (3) zur Befestigung eines Triebwerks (4) an einer tragenden Struktur, insbesondere an einem Flügelkasten (2), wobei das Stabwerk (3) eine Mehrzahl von punktförmig miteinander verbundenen und gegeneinander verstrebten Stäben (11, 12, 13, 15) aufweist und das Triebwerk (4) teilweise umgibt, wobei das Triebwerk (4) in der Antriebsrichtung des Triebwerks (4) an einem Ende des Stabwerks (3) drehmomentfest gelagert ist und wobei das Stabwerk (3) in der Antriebsrichtung des Triebwerks (4) an seinem anderen Ende an der tragenden Struktur drehmomentfest gelagert ist, **dadurch gekennzeichnet, daß** mindestens ein Stab (12) des Stabwerks (3) ein aktiver Stab ist, dessen Länge kontrolliert veränderbar ist, und dass eine Steuerung vorgesehen ist, die die Länge des mindestens einen aktiven Stabs (12) gezielt verändert, um eine aktive Schwingungsisolierung durchzuführen.

2. Triebwerksaufhängung nach Anspruch 1, **dadurch gekennzeichnet, daß** der mindestens eine aktive Stab (12) dort vorgesehen ist, wo das Stabwerk (3) beim Betrieb des Triebwerks (4) überdurchschnittliche dynamische Dehnungen erfährt.

3. Triebwerksaufhängung nach Anspruch 1 oder 2, **dadurch gekennzeichnet, daß** der mindestens eine aktive Stab (12) dort vorgesehen ist, wo das Stabwerk (3) beim Betrieb des Triebwerks (4) durch verschiedene Störanregungen dynamische Dehnungen erfährt.

4. Triebwerksaufhängung nach einem der Ansprüche 1 bis 3, **dadurch gekennzeichnet, daß** der mindestens eine aktive Stab (12) in Kraftflußrichtung der auf die tragende Struktur einwirkenden Lagerungskräfte angeordnet ist.

5. Triebwerksaufhängung nach einem der Ansprüche 1 bis 4, wobei das Stabwerk in der Antriebsrichtung des Triebwerks durch einen quer zu der Antriebsrichtung angeordneten Mittelrahmen unterteilt ist, **dadurch gekennzeichnet, daß** der mindestens eine aktive Stab (12) in dem der tragenden Struktur (2) zugewandten Teil des Stabwerks (3) angeordnet ist.

6. Triebwerksaufhängung nach einem der Ansprüche 1 bis 5, **dadurch gekennzeichnet, daß** der mindestens eine aktive Stab (12) zum Aufbringen großer Kräfte bei kleinen Längenänderungen ausgebildet ist.

7. Triebwerksaufhängung nach einem der Ansprüche 1 bis 6, **dadurch gekennzeichnet, daß** die Steuerung einen Regler aufweist, der die Länge des mindestens einen aktiven Stabs (12) derart verändert, daß die in vertikaler Richtung auf die tragende Struktur einwirkenden Lagerungskräfte konstant gehalten werden.

8. Triebwerksaufhängung nach einem der Ansprüche 1 bis 7, **dadurch gekennzeichnet, daß** je Richtung (17), in der beim Betrieb des Triebwerks sich ändernde Lagerungskräfte auf die tragende Struktur einwirken, mindestens ein aktiver Stab (12) in dem Stabwerk (3) vorgesehen ist.

9. Triebwerksaufhängung nach einem der Ansprüche 1 bis 8, **dadurch gekennzeichnet, daß** der mindestens eine aktive Stab (12) zwei Rohrabschnitte (20) aus Kohlefaserverbundwerkstoff mit achsparallelen unidirektionalen Fasern aufweist, wobei die beiden Rohrabschnitte (20) durch einen weiteren Rohrabschnitt (22) aus Kohlefaserverbundwerkstoff miteinander verbunden sind, der die beiden Rohrabschnitte (20) zumindest teilweise übergreift und der sich unter einem Winkel zur Stabachse (21) kreuzende Fasern aufweist, und wobei zwischen den beiden Rohrabschnitten (20) ein ansteuerbarer Aktuator (23) unter Vorspannung angeordnet ist.

10. Triebwerksaufhängung nach einem der Ansprüche 1 bis 9, **dadurch gekennzeichnet, daß** alle Stäbe (8, 11, 12, 15) des Stabwerks (3) Rohrabschnitte aus Kohlefaserverbundwerkstoff aufweisen.

## Claims

1. A turbine mount (1), in particular for propeller aircraft, with a framework (3) for fixing a turbine (4) at a supporting structure, in particular at a wing box (2), the framework comprising a plurality of rods (11, 12, 13, 15) which are connected to another in points and which are strutted against another, and partially surrounding the turbine (4); the turbine (4), in the propulsion direction of the turbine (4), being supported in a torque-resistant manner at one end of the framework (3); and the framework (3), in the propulsion direction of the turbine (4), being supported at its other end in a torque-resistant manner at the supporting structure, **characterized in that** at least one rod (12) of the framework (3) is an active rod, the length of which may be varied in a controlled way, and that a control unit is provided which on purpose varies the length of the at least one active rod (12) to accomplish an active vibration isolation.

2. The turbine mount according to claim 1, **characterized in that** the at least one active rod (12) is provided there, where the framework (3) is subjected to a more than average dynamic lengthening in operation of the turbine (4).

3. The turbine mount according to claim 1 or 2, **characterized in that** the at least one active rod (12) is provided there, where the framework (3) is subjected to dynamic lengthening because of different disturbing excitations in operation of the turbine (4).

4. The turbine mount according to any of the claims 1 to 3, **characterized in that** the at least one active rod (12) is oriented in the direction of force flux of the supporting forces acting upon the supporting structure..

5. The turbine mount according to any of the claims 1 to 4, the framework being divided in the propulsion direction by an intermediate frame oriented across the propulsion direction, **characterized in that** the at least one active rod (12) is arranged **in that** part of the framework (3) being closer to the supporting structure (2).

6. The turbine mount according to any of the claims 1 to 5, **characterized in that** the at least one active rod (12) is designed for applying high forces upon small variations in length.

7. The turbine mount according to any of the claims 1 to 6, **characterized in that** the control unit comprises a closed loop controller which varies the length of the at least one active rod (12) in such a way that the supporting forces acting upon the supporting structure in a vertical direction are kept constant.

8. The turbine mount according to any of the claims 1 to 7, **characterized in that** for each direction (17), in which varying supporting forces are acting upon the supporting structure in operation of the turbine, at least one active rod (12) is provided in the framework (3).

9. The turbine mount according to any of the claims 1 to 8, **characterized in that** the at least one active rod (12) has two tube sections (20) made of carbon fibre compound material having coaxial unidirectional fibres, the two tube sections being connected to each other via a further tube section (22) made of carbon fibre compound material, which at least partially covers the two tube sections (20) and which has fibres crossing each other at an angle with the rod axis (21), and an controllable actuator (23) being arranged between the two tube sections (20) in a pre-stressed way.

10. The turbine mount according to any of the claims 1 to 9, **characterized in that** all rods (8, 11, 12, 15) ) of the framework (3) have tube sections made of carbon fibre compound material.

## Revendications

1. Suspension de propulseur (1), en particulier pour avions à hélice, comportant un treillis (3) pour la fixation d'un propulseur (4) sur une structure portante, en particulier à un caisson d'aile (2), le treillis (3) comportant une pluralité de poutrelles (11, 12, 13, 15) reliées entre elles et entretoisées les unes par rapport aux autres, et entourant en partie le propulseur (4), le propulseur (4) étant monté de manière à résister au couple de rotation dans le sens de propulsion du propulseur (4), à une extrémité du treillis (3), et le treillis (3) étant monté de manière à résister au couple de rotation dans le sens de propulsion du propulseur (4), à son autre extrémité, sur la structure portante, **caractérisée en ce qu'**au moins une poutrelle (12) du treillis (3) est une poutrelle active dont la longueur peut être modifiée de manière contrôlée, et **en ce qu'**il est prévu une commande qui modifie de manière contrôlée la longueur de la ou des poutrelles actives (12) pour assurer une isolation active contre les oscillations.

2. Suspension de propulseur selon la revendication 1, **caractérisée en ce que** la ou les poutrelles actives (12) sont prévues là où le treillis (3) subit des dilatations dynamiques supérieurs à la moyenne pendant le fonctionnement du propulseur (4).

3. Suspension de propulseur selon la revendication 1 ou 2, **caractérisée en ce que** la ou les poutrelles actives (12) sont prévues là où le treillis (3) subit des dilatations dynamiques dus à différents excitations parasites pendant le fonctionnement du propulseur (4).

4. Suspension de propulseur selon l'une des revendications 1 à 3, **caractérisée en ce que** la ou les poutrelles actives (12) sont disposées dans la direction du flux des forces de support agissant sur la structure portante.

5. Suspension de propulseur selon l'une des revendications 1 à 4, dans laquelle le treillis est divisé dans le sens de propulsion du propulseur par un cadre central disposé transversalement à la direction de propulsion, **caractérisée en ce que** la ou les poutrelles actives (12) sont disposées dans la partie du treillis (3) tournée vers la structure portante (2).

6. Suspension de propulseur selon l'une des revendications 1 à 5, **caractérisée en ce que** la ou les poutrelles actives (12) sont conçues pour appliquer de grandes forces pour de petites variations de la longueur.

7. Suspension de propulseur selon l'une des revendications 1 à 6, **caractérisée en ce que** la commande comporte un régulateur qui modifie la longueur de la ou des poutrelles actives (12) de manière que les forces de support agissant sur la structure portante dans la direction verticale soient maintenues constantes.

8. Suspension de propulseur selon l'une des revendications 1 à 7, **caractérisée en ce qu'**il est prévu au moins une poutrelle active (12) dans le treillis (3) par direction (17) dans laquelle des forces de support variables agissent sur la structure portante pendant le fonctionnement du propulseur.

9. Suspension de propulseur selon l'une des revendications 1 à 8, **caractérisée en ce que** la ou les poutrelles actives (12) comportent deux tronçons de tube (20) en matériau composite aux fibres de carbone avec fibres unidirectionnelles aux axes parallèles, les deux tronçons de tube (20) étant reliés entre eux par un autre tronçon de tube (22) en matériau composite aux fibres de carbone qui passe au moins en partie sur les deux tronçons de tube (20) et qui comporte des fibres se croisant suivant un angle par rapport à l'axe (21) de la poutrelle, et un actionnement (23) commandable étant disposé avec précontrainte entre les deux tronçons de tube (20).

10. Suspension de propulseur selon l'une des revendications 1 à 9, **caractérisée en ce que** toutes les poutrelles (8, 11, 12,15) du treillis (3) comportent des tronçons de tube en matériau composite aux fibres de carbone.
